(19) Europäisches Patentamt
European Patent Office
Office européen des brevets

(11) **EP 4 553 532 A1**

(12) **EUROPEAN PATENT APPLICATION**

(43) Date of publication:
**14.05.2025 Bulletin 2025/20**

(21) Application number: 23208376.6

(22) Date of filing: **07.11.2023**

(51) International Patent Classification (IPC):
**G01S 5/20** (2006.01)   **G01S 5/22** (2006.01)
**G01S 5/28** (2006.01)   G01S 5/00 (2006.01)
G01S 3/808 (2006.01)

(52) Cooperative Patent Classification (CPC):
**G01S 5/20; G01S 5/22; G01S 5/28;** G01S 3/8083;
G01S 5/0072; G01S 2205/07

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FalCom A/S**
**2750 Ballerup (DK)**

(72) Inventors:
• **IPSEN, Klaus Sommer**
**DK-2750 Ballerup (DK)**
• **VERNER, Thorbjørn Gade**
**DK-2750 Ballerup (DK)**

(74) Representative: **Aera A/S**
**Niels Hemmingsens Gade 10, 5th Floor**
**1153 Copenhagen K (DK)**

(54) **SYSTEM FOR LOCATING AN AUDIO EVENT**

(57)    A system for locating an audio event. The system comprises multiple audio device configured for being interconnected to form a wireless network. Each audio device system comprises one or more microphones, a memory, a wireless communication interface, a location module for determining position data of the audio device system, and a processing unit. The system further comprises a central processing unit. The central processing unit is configured to receive audio device system signals and position data associated with each respective audio device signal from the audio device systems, and to determine an audio event and a position of the audio event based on the audio device system signals and the position data.

Fig. 1

**Description**

The present disclosure relates to a system for locating an audio event, an audio device system for locating an audio event and related methods.

BACKGROUND

In combat situations or other high stressed environments information regarding what is in your surroundings may be of the utmost importance. Especially, in environments with limited line of sight, e.g., urban environments, information on the surroundings may ensure the safety of personnel in the field.

Acoustic localization of sound events poses an attractive solution for providing information to personnel in the field. Acoustic localization is non reliant on line of sight and may thus provide information which may under normal circumstances have been hidden to personnel in the field.

Solutions have already been developed which utilizes the concept of acoustic localization for example US 2008084788 A discloses a gunshot location system which computes candidate gunshot locations from angle-of-arrival information and time-of-arrival information provided by acoustic sensors. In addition to an angle, each sensor calculates an angular uncertainty from impulses received at four or more microphones having rotational symmetry. An intersection of one or more time-of-arrival hyperbolas with one or more angle-of-arrival beams is used to determine a candidate gunshot location. In simple environments, a location can be confirmed with just two sensors allowing sensor density to be significantly reduced, while in complex environments including reflections, blocking, and interfering acoustic events, the additional angle-of-arrival information improves location accuracy and confidence, allowing elimination of candidate locations inconsistent with the combined time-of-arrival and angle-of-arrival information.

SUMMARY

However, there is still a need for an improved system for locating an audio event, especially in combat situations or other high stressed environments.

Accordingly, there is a need for a system, audio device system, and methods with improved capabilities for locating an audio event.

According to a first aspect of the present disclosure there is provided a system for locating an audio event. The system comprises multiple audio device systems. The audio device system being configured for being communicatively interconnected to form a wireless network. Each audio device system is configured to be worn by a user and comprises one or more microphones for obtaining an input audio signal indicative of ambient sounds, a memory, a wireless communication interface, a location module for determining position data of the audio device system, and a processing unit. The system further comprises a central processing unit. The central processing unit is configured for being communicatively connected to the audio device systems. The central processing unit is configured to receive audio device system signals and position data associated with each respective audio device signal from the audio device systems, determine an audio event based on the audio device system signals, determine a position of the audio event based on the audio device system signals and the position data associated with each respective audio device signal, and output the position of the audio event.

Consequently, an improved system for locating an audio event is provided. The audio device systems being wearable by a user allows for the system to be deployed where it is needed and to keep following the user as they move around.

According to a second aspect of the present disclosure, there is provided an audio device system comprising one or more microphones for obtaining an input audio signal indicative of ambient sounds, a speaker for outputting an output audio signal, a memory, a wireless communication interface, a location module for determining first position data of the audio device system, and a processing unit, wherein the processing unit is configured for being communicatively connected to other audio device systems, wherein the processing unit is configured to receive audio device system signals and position data associated with each respective audio device signal from the other audio device systems, obtain the input audio signal and first position data, determine an audio event based on the audio device system signals, and the input audio signal, determine a position of the audio event based on the audio device system signals, the position data associated with each respective audio device signal, the input audio signal and the first position data, and output the position of the audio event.

BRIEF DESCRIPTION OF THE DRAWINGS

The above and other features and advantages of the present disclosure will become readily apparent to those skilled in the art by the following detailed description of example embodiments thereof with reference to the attached drawings, in which:

Fig. 1 is a schematic drawing of an audio device system according to an embodiment of the present disclosure.

Fig. 2 is a schematic drawing of a system for locating an audio event according to an embodiment of the present disclosure.

DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The system may be a fully deployable system, e.g., both the multiple audio device systems and the central processing unit may be deployable. The system may be a partially deployable where the multiple audio device systems are deployable and the central processing unit is located at a remote location from where the multiple audio device systems are deployed, e.g., the audio device systems may be equipped by personnel in the field while the central processing unit is located at a command central receiving information from the personnel in the field.

The audio device systems may be communicatively interconnectable by radio connection. The audio device may be communicatively interconnectable to other components of the audio device system via a Bluetooth connection, a Wi-Fi connection, or a NFC connection. The audio device system may comprise a communication module configured for allowing the audio device system to communicate wirelessly with other audio device systems and the central processing unit. The communication module may comprise a transmitter, a receiver, and/or a transceiver configured for wireless communication. The communication module may be wirelessly communicatively connectable to other parts of the audio device system worn by the user. The communication module may be communicatively connectable by a wired connection to other parts of the audio device system worn by the user. The communication module may be provided as a modular part, i.e., the part may be replaceable by another communication module.

The multiple audio device systems are configured for being communicatively interconnected to form a wireless network. The multiple audio device systems may be interconnected to form a local area wireless network. The audio device systems may be configured to perform as nodes in a wireless network. One or more of the audio device systems may be configured to perform as network gateways in a wireless network.

The audio device system is configured to be worn by a user of the audio device system. The audio device system may be provided with a form factor facilitating wearing of the audio device system. The audio device system may be connectable by straps, snaps, or similar to a user of the audio device system. The audio device system may form part of a loadout for field personnel.

The audio device system comprises one or more microphones for obtaining an input audio signal. The one or more microphones may be understood as one or more of input transducers configured for converting an acoustic signal into an electric input signal. The electric input signal may be an analog signal. The electric input signal may be a digital signal. The plurality of input transducers may be coupled to one or more analog-to-digital converters configured for converting the analog input signal into a digital input signal. The one or more microphones may be stand-alone microphones, or be microphones incorporated in an audio device, such as a headset or a pair of earbuds.

The audio device system may comprise an output transducer. The audio device system may comprise a plurality of output transducers. The output transducer may be coupled to the processing unit. The output transducer may be a loudspeaker, or any other device configured for converting an electrical signal into an acoustical signal. The output transducer may be configured for converting an electric output signal into an acoustic output signal. The one or more output transducers may be stand-alone output transducers, or be output transducers incorporated in an audio device, such as a headset or a pair of earbuds. The audio device system may be configured to receive a signal from the central processing unit and output it via the output transducer.

The audio device system comprises a wireless communication interface. The wireless communication interface may be comprised by a communication module of the audio device system.

The wireless communication interface may comprise a wireless transceiver, also denoted as a radio transceiver, and an antenna for wireless transmission and reception of an audio signal, such as for wireless transmission of an output signal and/or wireless reception of a wireless input signal. The audio device system may be configured for wireless communication with one or more electronic devices, such as another audio device system, a smartphone, a tablet, a computer and/or a smart watch. The audio device system optionally comprises an antenna for converting one or more wireless input audio signals to antenna output signal(s). The audio device system may be configured for wireless communications via a wireless communication system, such as short-range wireless communications systems, such as Wi-Fi, Bluetooth, Zigbee, IEEE 802.11, IEEE 802.15, infrared and/or the like. The audio device system may be configured for wireless communications via a wireless communication system, such as a 3GPP system, such as a 3GPP system supporting one or more of: New Radio, NR, Narrow-band IoT, NB-IoT, and Long Term Evolution - enhanced Machine Type Communication, LTE-M, millimeter-wave communications, such as millimeter-wave communications in licensed bands, such as device-to-device millimetre-wave communications in licensed bands. In one or more example audio device systems the wireless communication interface of the audio device system comprises one or more of: a Bluetooth interface, Bluetooth low energy interface, and a magnetic induction interface. For example, the wireless communication interface of the audio device system may comprise a Bluetooth antenna and/or a magnetic interference antenna. In one or more example audio device systems, the interface may comprise a connector for wired communication, via a connector, such as by using an electrical cable. The connector may communicatively connect the wireless communication interface to other components of the audio device system.

The audio device system may comprise one or more antennas configured for wireless communication. The one or more antennas may comprise an electric antenna. The electric antenna is configured for wireless communication at a first frequency. The first frequency may be above 800 MHz, such as a wavelength between 900 MHz and 6 GHz. The first frequency may be 902 MHz to 928 MHz. The first frequency may be 2.4 to 2.5 GHz. The first frequency may be 5.725 GHz to 5.875 GHz. The one or more antennas may comprise a magnetic antenna. The magnetic antenna may comprise a magnetic core. The magnetic antenna comprises a coil. The coil may be coiled around the magnetic core. The magnetic antenna is configured for wireless communication at a second frequency. The second frequency may be below 100 MHZ. The second frequency may be between 9 MHZ and 15 MHZ.

The audio device system may be configured for wireless communication with one or more external devices, such as one or more accessory devices, such as a smartphone and/or a smart watch. The audio device system may be configured for wireless communication with the central processing unit.

The audio device system comprises a location module. The location module may comprise a GPS for determining position data. The location module may comprise an inertial navigation system for determining position data. The location module may be communicatively connected to the wireless communication interface of the audio device system. The location module may be configured to provide the position data as a digital signal to the wireless communication interface to allow the wireless communication interface to transmit the position data to the central processing unit. The location module may be embodied as a modular part connectable to other modular parts of the audio device system. The location module may be connectable to other parts via a wired or a wireless connection. The position data may be in the form of longitude coordinates and latitude coordinates. The location module may comprise an inertial measurement unit, a gyroscope and/or an accelerometer. The location module may be configured to provide orientation data, wherein the orientation data is indicative of a current orientation of the audio device system. The orientation data may be comprised in the position data.

The audio device system comprises one or more processing units. The processing unit may be configured for processing one or more input signals. The one or input signals may be one or more inputs signal obtained by the one or more input transducers, and/or one or more input signals obtained via the wireless communication interface. The processing may comprise a signal enhancement scheme. The processing may comprise audio processing, such as compensating for a hearing loss of the user, i.e., apply frequency dependent gain to input signals in accordance with the user's frequency dependent hearing impairment. The processing may comprise performing feedback cancellation, echo control, beamforming, tinnitus reduction/masking, noise reduction, noise cancellation, speech recognition, bass adjustment, treble adjustment, face balancing and/or processing of user input. The processing unit may be a processor, an integrated circuit, an application, functional module, etc. The processing unit may be implemented in a signal-processing chip or a printed circuit board (PCB). The processing unit is configured to provide an electric output signal based on the processing of one or more input signals. The processing unit may be configured to provide one or more further electric output signals. The one or more further electric output signals may be based on the processing of one or more input signals. The processing unit may comprise a receiver, a transmitter and/or a transceiver for receiving and transmitting wireless signals. The processing unit may be configured to provide one or more output signal to an output transducer of the audio device system.

The processing unit may be configured to determine an audio device system signal. The processing unit may be configured to determine an audio device system signal, based on the input audio signal. The processing unit may be configured to receive position data from the location module. The processing unit may be configured to transmit the audio device system signal and/or the position data to the central processing unit.

The audio device system signal may comprise the input audio signal. The audio device system signal may comprise information regarding the input audio signal.

The system comprises a central processing unit. The system may comprise one or more central processing units.

The central processing unit may be configured for processing one or more input signals. The one or more input signals may be one or more input signal obtained by a wireless or wired communication link. The central processing unit may be communicatively connected with a central wireless communication interface to allow the central processing unit to receive one or more input signals over a wireless or wired link, e.g., the central processing unit may be communicatively connected to a central transceiver or similar. The processing performed by the central processing unit may comprise a signal enhancement scheme. The processing may comprise audio processing, such as compensating for a hearing loss of the user, i.e., apply frequency dependent gain to input signals in accordance with the user's frequency dependent hearing impairment. The processing may comprise performing feedback cancellation, echo control, beamforming, tinnitus reduction/masking, noise reduction, noise cancellation, speech recognition, bass adjustment, treble adjustment, face balancing and/or processing of user input. The central processing unit may be implemented in a signal-processing chip or a printed circuit board (PCB). The central processing unit is configured to provide an electric output signal based on the processing of one or more input signals. The processing unit may be configured to provide one or more further electric output signals. The one or more further electric output signals may be based on the processing of one or more input signals. The central processing unit may comprise a receiver, a transmitter and/or a transceiver for receiving and transmitting wireless signals.

The central processing unit may be arranged separately from the audio device systems, alternatively, one or more of the processing units associated with the audio device systems may assume the role as the central processing unit.

The central processing unit is configured to receive audio device system signals and position data associated with each respective audio device signal from the audio device systems. The central processing unit may receive the audio device system signals and the position data via one or more wireless communication links.

The central processing unit is configured to determine an audio event based on the audio device system signals. The central processing unit may be configured to perform signal processing on the audio device systems signals to determine the audio event, e.g., by applying one or more signal processing schemes to the audio device system signals. The central processing unit may be configured to read from each audio device system signal whether a local audio event has occurred, e.g., each audio device system signal may comprise data indicating whether a local audio event has occurred at the corresponding audio device system, the central processing unit may determine based on the local audio events whether the audio event has occurred. In the below description of the present disclosure further elaboration is provided on different methods for determining an audio event, furthermore, the above and below provided methods are not mutually exclusive and may be used to reinforce one another.

In the context of the present text, the wording determining the audio event may be understood as determining whether the audio event has occurred.

An audio event in the present disclosure may be understood as a sound occurring due to an action of interest for a user of the audio device system. For example, an audio event may be a gunshot, the sound of machinery, people talking, footsteps, etc..

The central processing unit is configured to determine a position of the audio event based on the audio device system signals and the position data associated with each respective audio device signal. The central processing unit may be configured to, in response to determining an audio event has occurred, determine a position of the audio event based on the audio device system signals and the position data associated with each respective audio device signal. The central processing unit may be configured to perform signal processing on the audio device system signals and the position data to determine the position of the audio event, e.g., by applying one or more signal processing schemes to the audio device system signals and the received position data. The central processing unit may be configured to read from each audio device system signal a direction of arrival of the audio event and determine based on the position data and direction of arrival associated with each audio device system the position of the audio event. In the below description of the present disclosure further elaboration is provided on different methods for determining the position of the audio event, furthermore, the above and below provided methods are not mutually exclusive and may be used to reinforce one another.

The central processing unit is configured to output the position of the audio event. The central processing unit may output the position of the audio event to a central command, which may use the information to assist in strategic decision making. The central processing unit may output the position of the audio event for further processing. The central processing unit may output the position of the audio event as a signal to be transmitted to the audio device systems communicatively to the central processing unit, e.g., to inform personnel in the field on the position of the audio event. The central processing unit may output the position of the audio event to a cloud.

Each of the audio device systems may comprise an audio device. The audio device may be configured to be worn by a user. The audio device may be arranged at the user's ear, on the user's ear, over the user's ear, in the user's ear, in the user's ear canal, behind the user's ear, and/or in the user's concha, i.e., the audio device is configured to be worn at the user's ear.

The audio device may be configured to be worn by a user at each ear, e.g., a pair of ear buds or a head set with two earcups. In the embodiment where the audio device is to be worn at both ears, the components meant to be worn at each ear may be connected, such as wirelessly connected and/or connected by wires, and/or by a strap. The components meant to be worn at each ear may be substantially identical or differ from each other.

The audio device may be a hearable such as a headset, headphones, earphones, ear bud, hearing aids, an over the counter (OTC) hearing device, a hearing protection device, a one-size-fits-all audio device, a custom audio device and/or another head-wearable audio device. The audio device may be a combination of a set of earbuds and a headset.

The audio device may comprise a power source. The power source may comprise a battery providing a first voltage. The battery may be a rechargeable battery. The battery may be a replaceable battery. The power source may comprise a power management unit. The power management unit may be configured to convert the first voltage into a second voltage. The power source may comprise a charging coil. The charging coil may be provided by the magnetic antenna.

The audio device may comprise a memory, including volatile and non-volatile forms of memory.

The audio device of the audio device system may be embodied as modular part connectable to other modular parts of the audio device system. The audio device module may be connectable to other parts via a wired or a wireless connection.

In an embodiment each audio device system comprises a hearing protection device.

By a hearing protection device is meant a device configured to be worn by a user to protect the user from hazardous noise. The hearing protection device may be worn over and/or in the ears.

The hearing protection device may be embodied as a headset and/or one or more earbuds.

The hearing protection device may comprise the one or more microphones for obtaining an input audio signal. Consequently, the system may utilize the one or more microphones comprised by the hearing protection device of each audio device system to determine the position of the audio event, hence, the need for adding additional microphones to a load out of field personnel is obviated.

The hearing protection device may comprise a speaker for outputting the output audio signal.

In an embodiment the one or more microphones of each audio device system are hear-through and/or feedforward microphones comprised by the hearing protection device.

A hear-through microphone should be understood as a microphone configured to support an audio mode where ambient sound is obtained by the hear-through microphone and subsequently provided to the user via one or more output transducers. The ambient sound may undergo processing before being provided to the user.

A feedforward microphone should be understood as a microphone configured to support an audio mode where ambient sound is obtained by the feedforward microphone and subsequently used for feedforward active noise cancellation.

In an embodiment the one or more microphones of each audio device system are configured to obtain an input audio signal indicative of ambient sounds.

Consequently, the microphones may be arranged advantageously to obtain ambient sounds. In an example, the audio device system comprises a headset and the one or more microphones are arranged on an outer surface of the headset. In an example, the one or more microphones may be arranged as one or more feed-forward microphones and/or one or more hear-through microphones of a headset.

In an embodiment the audio device systems are configured for being communicatively interconnected to form a mesh network.

A mesh network has proven to a be a stable manner of connecting audio device systems in the field, as a mesh network is not over reliant on single nodes for communication.

In an embodiment each processing unit associated with an audio device system is configured to input the input audio signal to a sound event detection model. The sound event detection model is configured to receive an input audio signal and output one or more sound label associated with the input audio signal. Each processing unit is further configured to determine the audio device system signal based on the one or more sound labels associated with the input audio signal, and transmit the audio device system signal to the central processing unit.

Consequently, more in-depth information on a possible sound event may be achieved by analysing the sound labels. The sound labels may be outputted at a command central for further analysis. The one or more sound labels may provide additional information on the nature of the audio event, e.g., whether it is a gunshot or machinery. The one or more sound labels may be comprised in the audio device system signal may be used by the central processing unit to determine the audio event.

Determining the sound labels locally, i.e., at each audio device system, may be advantageously as no degradation of the audio signal due to transmission of the audio signal over various channels have occurred. Degradation may for example occur during encoding or decoding. The degradation of the audio signal could in worse case scenarios lead to faulty labelling of the input audio signal. Furthermore, determining the sound labels locally may limit the amount of bandwidth taken up by audio device system signals, as the need to transmit the full audio input signal may be obviated and instead the audio device system signal may simply comprise the determined labels or information derived from the sound labels.

The input audio signal may be inputted directly to the sound event detection model, alternatively, the input audio signal may undergo one or more processing steps before being inputted to the input audio signal.

The sound event detection model may be a machine learning model trained to attach sound labels to an audio signal based on the content of the audio signal. The sound event detection model may be a neural network. Sound event detection models are already well-known within the field of audio processing, a more in-depth explanation of sound event detection models can for example be found in Mesaros, Annamaria, et al. "Sound event detection: A tutorial." IEEE Signal Processing Magazine 38.5 (2021): 67-83.

The one or more sound labels may comprise information on when a sound event starts and when it terminates. The one or more sound labels may comprise flags, where a flag indicates a sound event has occurred. The one or more sound labels may comprise text messages describing the event in the input audio signal.

Determining the audio device system signal based on the one or more sound labels associated with the input audio signal may be carried out in a plethora of manners. In an embodiment, the sound labels are analysed locally to determine whether a sound event has occurred, then the result of the analysis is comprised in the audio device system signal. Alternatively, the audio device system signal may comprise the determined labels which may be analysed centrally and compared to sound labels determined by other audio device systems.

The central processing unit may determine whether an audio event has occurred by analysing sound labels received from the audio device systems. For example, if the central processing unit determines, based on the audio device system signals, that each of the audio device systems has determined a sound label associated with an audio event at approximately the same time the central processing unit may determine that the audio event has occurred. In some embodiments, the central processing unit may determine a sound event has occurred if two or more audio device systems has determined a sound label associated with an audio event at approximately the same time. When writing approximately the same time it may be understood that a small delay may be present due to the audio device systems having differing distances to the sound event.

In an embodiment each processing unit associated with an audio device system is configured to determine a transient in the input audio signal, determine a transient signal based on the transient, and transmit an audio device system signal to the central processing unit, wherein the audio device system signal comprises the transient signal.

Consequently, a simple approach is applied which may facilitate the determination on an audio event. The transient signal may be outputted at a command central for further analysis. The transient signal comprised in the audio device system signal may be used by the central processing unit to determine the audio event.

The transient may be determined by identifying peaks in the sound level of the audio input signal and comparing them to one or more thresholds.

The transient signal may comprise an indication that a transient has been determined in the input audio signal. The transient signal may comprise audio data corresponding to the transient event. The transient signal may comprise information regarding the transient, such as a duration of the transient, and/or a level of the transient. The transient signal may comprise an indication that an audio event has occurred.

Determining the transient, i.e., at each audio device system, may be advantageously as no degradation of the audio signal due to transmission of the audio signal over various channels have occurred. Degradation may for example occur during encoding or decoding. The degradation of the audio signal could in worse case scenarios lead to faulty determination of the transient. Furthermore, by determining the transient locally it may limit the amount of bandwidth taken up by the audio device system signals, as the need to transmit the full audio input signal may be obviated and instead the audio device system signal may simply comprise the determined transient, or an indication that a transient has been determined in the input audio signal.

The transient may be understood as a high amplitude short duration sound, such as a gunshot. The threshold for whether a transient is determined may be pre-set in a factory setting, where one or more audio engineers may adapt the threshold associated with a transient, so a transient is determined when an audio event of interest occurs, e.g., the thresholds associated for when to determine a transient may be set to correspond to a sound signature associated with a gunshot.

The central processing unit may determine whether an audio event has occurred by analysing transients received from the audio device systems. For example, if the central processing unit determines, based on the audio device system signals, that each of the audio device systems has determined a transient at approximately the same time the central processing unit may determine that the audio event has occurred. In some embodiments, the central processing unit may determine a sound event has occurred if two or more audio device systems has determined a transient at approximately the same time. When writing approximately the same time it may be understood that a small delay may be present due to the audio device systems having differing distances to the sound event.

In an embodiment each processing unit associated with an audio device system is configured to determine a direction of arrival of the input audio signal, and transmit the audio device system signal to the central processing unit, wherein the audio device system signal comprises the direction of arrival.

Consequently, each audio device system may provide a direction of arrival. in case of an audio event being determined it may easily be located based on the directions of arrivals from the audio device systems.

The previous advantages mentioned in relation to determining the transient and the sound labels locally may be equally applicable to determining the direction of arrival locally, i.e., reduction of bandwidth taken by the audio device system signal, avoidance of degradation of the input audio signal, etc.

The central processing unit may determine a position of the audio event based on the one or more direction of arrivals and the position data received from the audio device systems. For example, if the central processing unit determines an audio event, it may determine the position of the audio event by analysing the directions of arrival together with the location data. The central processing unit may further utilize orientation data comprised in the location data to determine a position of the audio event based on the one or more direction of arrivals and the position data received from the audio device systems.

In an embodiment each processing unit associated with an audio device system is configured to determine one or more timestamps for the audio input signal, and transmit the audio device system signal to the central processing unit, wherein the audio device system signal comprises the one or more timestamps.

The one or more timestamps may facilitate synchronization of the audio device system signals. The central processing unit may synchronize the audio device system signals based on the timestamps received from the audio device systems. The one or more timestamps may facilitate synchronization of audio input signals from different audio device systems. The central processing unit may synchronize audio input signals from different audio device systems based on the timestamps received from the audio device systems.

Each audio device system may comprise a clock for providing the one or more timestamps. The clocks may be synchronized relative to each other before the audio device systems are deployed. The clocks may be synchronized to each other when deployed by various means such as the Berkeley algorithm, or Cristian's algorithm. Each clock may be configured to provide a measure of absolute time.

Alternatively, the central processing unit may be configured to synchronize the audio device systems signal by means such as cross correlation, especially if the audio device system signals comprise the audio input signals obtained by the audio device systems.

In an embodiment each processing unit associated with an audio device system is configured to transmit the audio device system signal to the central processing unit, wherein the audio device system signal comprises the input audio signal.

Consequently, processing of the input audio signal may be off loaded from the audio device systems and instead performed by the central processing unit. This may be advantageous as the processing power available at the audio device systems may be limited, where the central processing unit may not suffer under the same limitations.

In an embodiment the central processing unit is configured to input the input audio signals from the audio device system signals to a sound event detection model, wherein the sound event detection model is a machine learning model trained to receive an input audio signal and output one or more sound label associated with the input audio signal, and determine an audio event based on the one or more sound labels.

Consequently, more in-depth information on a possible sound event may be achieved by analysing the sound labels. The sound labels may be outputted at a command central for further analysis. The one or more sound labels may provide additional information on the nature of the audio event, e.g., whether it is a gunshot or machinery.

Determining the sound labels centrally, i.e., at the central processing unit, may be advantageously as it off loads processing from the audio device systems.

The input audio signals may be inputted directly to the sound event detection model, alternatively, the input audio signals may undergo one or more processing steps before being inputted to the input audio signal. The central processing unit is configured to input the received input audio signals from the audio device system signals to the sound event detection model to determine a plurality of sound labels associated with the received input audio signals.

The central processing unit may determine whether an audio event has occurred by analysing sound labels associated with input audio signals received from the audio device systems. For example, if the central processing unit determines, based on the audio device system signals, that two or more of the audio device systems obtained an input audio signal with a sound label associated with an audio event at approximately the same time the central processing unit may determine that the audio event has occurred.

In an embodiment the central processing unit is configured to determine a transient in the input audio signal, and determine the audio event based on the transient.

Consequently, a simple approach is applied which may facilitate the determination on an audio event.

The transient may be determined by identifying peaks in the sound level of the audio input signal and comparing them to a threshold.

The central processing unit may be configured to determine a transient in each of the input audio signals received from the audio device systems.

The central processing unit may determine whether an audio event has occurred by analysing transients associated with input audio signals received from the audio device systems. For example, if the central processing unit determines, based on the audio device system signals, that two or more of the audio device systems obtained an input audio signal with a transient associated with an audio event at approximately the same time the central processing unit may determine that the audio event has occurred.

In an embodiment the central processing unit is configured to determine directions of arrival based on the audio device system signals and the audio event, and determine the position of the audio event based on the directions of arrival.

In an embodiment the central processing unit is configured to determine times of arrival of the audio event based on the audio device system signals, and determine the position of the audio event based on the times of arrival.

The times of arrival may be determined by analysing one or more timestamps associated with the audio device system signals, e.g., one or more timestamps associated with the input audio signals comprised by the audio device system signals.

The times of arrival may be relative times of arrival, i.e., the times of arrival of the different audio device systems being determined relative to each other.

The times of arrival may be absolute times of arrival, i.e., the times of arrival corresponding to absolute times.

Preferably, three or more time of arrival associated with different audio device systems are used to determine the position of the audio event.

The times of arrival may be used to determine the position of the audio event by methods such as acoustic triangulation. For example, the speed of sound, C, is known to be:

$$C = 331.3 + 0.606 * T$$

Where T is the air temperature. The audio device system may comprise a temperature sensor, to allow it to calculate C, alternatively, C may be set as a constant by assuming an air temperature of 15 degrees Celsius. From this and knowing the position of the audio device systems and the arrival times, the following two equations with two unknowns can be derived:

$$\frac{1}{C}\sqrt{(x_i - x_a)^2 + (y_i - y_a)^2} - \frac{1}{C}\sqrt{(x_i - x_b)^2 + (y_i - y_b)^2} = t_a - t_b = \Delta t_{ab}$$

$$\frac{1}{C}\sqrt{(x_i - x_c)^2 + (y_i - y_c)^2} - \frac{1}{C}\sqrt{(x_i - x_b)^2 + (y_i - y_b)^2} = t_c - t_b = \Delta t_{cb}$$

Where $x_i$ and $y_i$ is the position of the audio event, $x_a$ and $y_a$ is the position of a first audio device system, $x_b$ and $y_b$ is the position of a second audio device system, $x_c$ and $y_c$ is the position of a third audio device system, $t_a$ is the arrival time at the first audio device system, $t_b$ is the arrival time at the second audio device system, and $t_c$ is the arrival time at the third audio device system . By solving these two equations the position of the audio event may be determined. This is only a simple example of how the arrival times may be used in determining the position of the audio event, other approaches may equally valid.

In an embodiment the central processing unit is configured to synchronize the input audio signals.

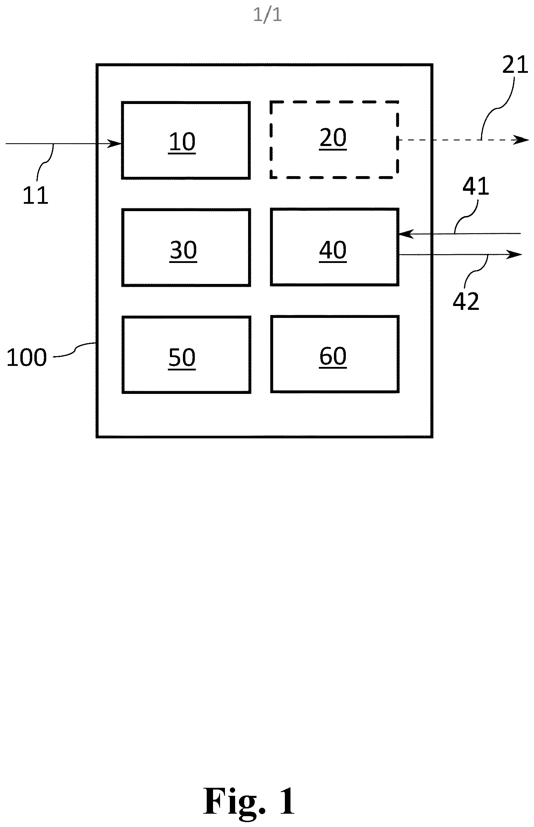

Referring to Fig. 1 which depicts a schematic drawing of an audio device system 100 according to an embodiment of the present disclosure. The audio device system 100 is configured to be worn by a user. The audio device system 100 may be fully or at least partly be embodied by a wearable audio device, such as a headset, one or more earbuds, or a smart device. The audio device system 100 may form part of a kit for deployment in the field. The audio device system 100 may be embodied as a modular system, e.g., as an audio device connected wirelessly or by wired to a transceiver and a modular location module.

The audio device system 100 comprises one or more microphones 10. The one or more microphones 10 are for obtaining an input audio signal indicative of ambient sounds 11. The one or more microphones 10 of the audio device system 100 may be hear-through and/or feedforward microphones comprised by a hearing protection device 100.

The audio device system 100 may comprise one or more loudspeakers 20. The loudspeakers being for outputting a loudspeaker sound 21. The loudspeakers 20 may be configured to output the loudspeaker sound 21 to the user of audio device system 100.

The audio device system 100 comprises a memory 30. The memory 30 may be a volatile or non-volatile memory 30. The audio device system 100 may comprise a storage for the long-term storage of data.

The audio device system 100 comprises a wireless communication interface 40. The wireless communication interface 40 facilitates wireless communication with devices external to the audio device system 100. The wireless communication interface 40 may comprise a transmitter, a receiver, and/or a transceiver. The audio device system 100 may be configured to receive in-coming signals 41 via the wireless communication interface 40. The in-coming signals 41 may be signals transmitted from other audio device systems, or a central processing unit. The audio device system 100 may be configured to transmit out-coming signals 42 via the wireless communication interface 40, such as an audio device system signal 42.

The audio device system 100 comprises a location module 50. The location module 50 being for determining position data of the audio device system 100. The location module 50 may be a GPS module or similar. The location module 50 may also be configured to provide orientation data for the audio device system, the orientation data may be comprised in the position data.

The audio device 100 comprises a processing unit 60. The processing unit 60 may be configured to process the input audio signal and the position data. The processing unit 60 may receive the input audio signal from the one or more microphones 10. The processing unit 60 may be configured to determine the audio device system signal 42 based on the input audio signal. The processing unit 60 is configured to transmit the audio device system signal 42 to a central processing unit. The processing unit 60 is configured to transmit the audio device system signal 42 and position data to the central processing unit. The processing unit 60 may be configured to input the input audio signal to a sound event detection model. The sound event detection model may be a model stored in the memory 30 of the audio device system 100. The sound event detection model may be configured to receive the input audio signal and output one or more sound label associated with the input audio signal. The processing unit 60 may be configured to determine the audio device system signal 42 based on the one or more sound labels associated with the input audio signal. The processing unit 60 may determine the audio device system signal 42 to comprise the one or more sound labels associated with the input audio signal. The processing unit 60 may be configured to determine a transient in the input audio signal. The processing unit 60 may be configured to determine the audio device system signal 42 based on the transient. The processing unit 60 may be configured to determine the audio device system 42 to comprise the transient. The processing unit 60 may be configured to determine a direction of arrival of the input audio signal. The processing unit 60 may be configured to transmit the audio device system signal 42 to the central processing unit, where the audio device system signal 42 comprises the determined direction of arrival of the input audio signal. The processing unit 60 may be configured to determine one or more timestamps for the audio input signal. The processing unit 60 may be configured to transmit the audio device system signal 42 to the central processing unit, where the audio device system signal 42 comprises the one or more timestamps. The processing unit 60 may be configured to transmit the audio device system signal 42 to the central processing unit, where the audio device system signal comprises the input audio signal.

The audio device system 100 may comprise a hearing protection device 100. The hearing protection device 100 may be embodied as a headset or a pair of earbuds.

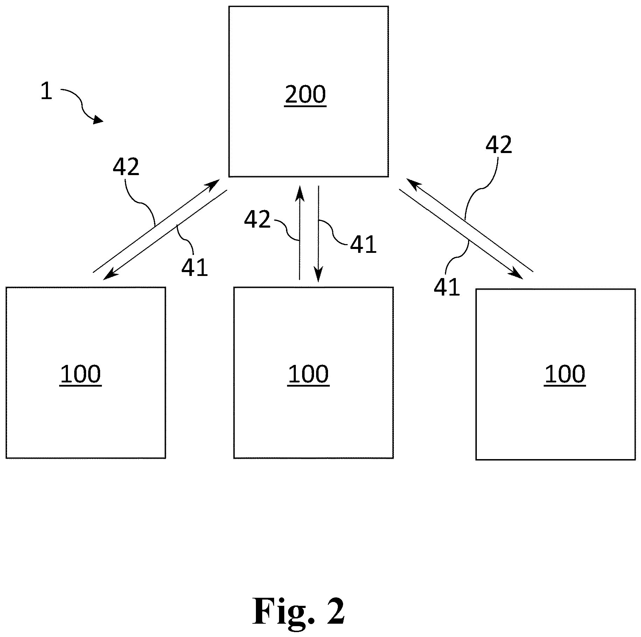

Referring to Fig. 2 which depicts a schematic drawing of a system 1 according to an embodiment of the present disclosure.

In the shown embodiment the system 1 comprises a central processing unit 100, and multiple audio device systems 100. The system 1 may comprise two, three, four, five, or more audio device systems 100. The audio device systems 100 may each correspond to the audio device system 100 described in relation to Fig. 1.

The multiple audio device systems 100 are configured for being communicatively interconnected to form a wireless network. The audio device systems 100 may be configured for being communicatively interconnected to form a mesh network.

The central processing unit 200 is communicatively connected to the audio device systems 100. The central processing unit 200 is configured to receive signals 42 from the audio device systems 100, the signals 42 may for example be audio device system signals 42 and position data. The central processing is configured to transmit signals 41 to the audio device systems 100. The signals 41 transmitted by the central processing unit may comprise information regarding an audio event, such as a position of an audio event. The central processing unit 200 is configured to receive audio device system signals 42 and position data 42 associated with each respective audio device signal from the audio device systems 100. The central processing unit 200 is configured to determine an audio event based on the audio device system signals 42. The central processing unit 200 is configured to determine a position of the audio event based on the audio device system signals 42 and the position data associated with each respective audio device signal. The central processing unit 200 is configured to output the position of the audio event. The audio device system signals 42 may comprise input audio signals obtained by the audio device systems 100. The central processing unit 200 may be configured to input the input audio signals from the audio device system signals to a sound event detection model. The sound event detection model is a machine learning model trained to receive an input audio signal and output one or more sound label associated with the input audio signal. The central processing unit 200 may be configured to determine an audio event based on the one or more sound labels. The central processing unit 200 may be configured to determine a transient in the input audio signal. The central processing unit 200 may be configured to determine the audio event based on the transient. The central processing unit 200 may be configured to determine directions of arrival based on the audio device system signals 42 and the audio event. The central processing unit 200 may be configured to determine the position of the audio event based on the directions of arrival. The central processing unit 200 may be configured to determine times of arrival of the audio event based on the audio device system signals 42. The central processing unit may be configured to determine the position of the audio event based on the times of arrival. The central processing unit 200 may be configured to synchronize the input audio signals comprised in the audio device system signals 42.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of", "characterizing", and/or "defining". The terms "indicative of", "associated with" "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the example embodiments may be implemented at least in part by means of both hardware and software, and that several "means", "units" or "devices" may be represented by the same item of hardware.

The various example methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the spirit and scope of the claimed disclosure. The specification and drawings are, accordingly to be regarded in an illustrative rather than restrictive sense. The claimed disclosure is intended to cover all alternatives, modifications, and equivalents.

**Claims**

1. A system for locating an audio event comprising:

    • multiple audio device systems configured for being communicatively interconnected to form a wireless network, each configured to be worn by a user and comprising

        one or more microphones for obtaining an input audio signal indicative of ambient sounds,

a memory,
a wireless communication interface,
a location module for determining position data of the audio device system, and
a processing unit,

• a central processing unit configured for being communicatively connected to the audio device systems, wherein the central processing unit is configured to

receive audio device system signals and position data associated with each respective audio device signal from the audio device systems,
determine an audio event based on the audio device system signals,
determine a position of the audio event based on the audio device system signals and the position data associated with each respective audio device signal, and
output the position of the audio event.

2. A system according to claim 1, wherein each audio device system comprises a hearing protection device.

3. A system according to any of the preceding claims, wherein the one or more microphones of each audio device system are hear-through and/or feedforward microphones comprised by the hearing protection device.

4. A system according to any of the preceding claims, wherein the audio device systems are configured for being communicatively interconnected to form a mesh network.

5. A system according to any of the preceding claims, wherein each processing unit associated with an audio device system is configured to:

input the input audio signal to a sound event detection model, wherein the sound event detection model is configured to receive an input audio signal and output one or more sound label associated with the input audio signal,
determine the audio device system signal based on the one or more sound labels associated with the input audio signal, and
transmit the audio device system signal to the central processing unit.

6. A system according to any of the preceding claims, wherein each processing unit associated with an audio device system is configured to:

determine a transient in the input audio signal,
determine the audio device system signal based on the transient, and
transmit an audio device system signal to the central processing unit.

7. A system according to any of the preceding claims, wherein each processing unit associated with an audio device system is configured to:

determine a direction of arrival of the input audio signal, and
transmit the audio device system signal to the central processing unit, wherein the audio device system signal comprises the direction of arrival.

8. A system according to any of the preceding claims, wherein each processing unit associated with an audio device system is configured to:

determine one or more timestamps for the audio input signal, and
transmit the audio device system signal to the central processing unit, wherein the audio device system signal comprises the one or more timestamps.

9. A system according to any of the preceding claims, wherein each processing unit associated with an audio device system is configured to:
transmit the audio device system signal to the central processing unit, wherein the audio device system signal comprises the input audio signal.

10. A system according to claim 9, wherein the central processing unit is configured to:

input the input audio signals from the audio device system signals to a sound event detection model, wherein the sound event detection model is a machine learning model trained to receive an input audio signal and output one or more sound label associated with the input audio signal, and
determine an audio event based on the one or more sound labels.

11. A system according to claim 9 or 10, wherein the central processing unit is configured to:

determine a transient in the input audio signal, and
determine the audio event based on the transient.

12. A system according to any of claims 9 to 11, wherein the central processing unit is configured to:

determine directions of arrival based on the audio device system signals and the audio event, and
determine the position of the audio event based on the directions of arrival.

13. A system according to any of claims 9 to 12, wherein the central processing unit is configured to:

determine times of arrival of the audio event based on the audio device system signals, and
determine the position of the audio event based on the times of arrival.

14. A system according to any of claims 9 to 13, wherein the central processing unit is configured to:
synchronize the input audio signals.

15. An audio device system comprising

one or more microphones for obtaining an input audio signal indicative of ambient sounds,
a speaker for outputting an output audio signal,
a memory,
a wireless communication interface,
a GPS module for determining first position data of the audio device system, and
a processing unit,

wherein the processing unit is configured for being communicatively connected to other audio device systems, wherein the processing unit is configured to

receive audio device system signals and position data associated with each respective audio device signal from the other audio device systems,
obtain the input audio signal and first position data,
determine an audio event based on the audio device system signals, and the input audio signal,
determine a position of the audio event based on the audio device system signals, the position data associated with each respective audio device signal, the input audio signal and the first position data, and
output the position of the audio event.

**Fig. 1**

**Fig. 2**

Europäisches
Patentamt

European
Patent Office

Office européen
des brevets

# EUROPEAN SEARCH REPORT

**Application Number**

EP 23 20 8376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/063270 A1 (ANGELL ROBERT CHARLES [US] ET AL) 15 March 2012 (2012-03-15) * claims 1-9; figures 1-3 * * paragraphs [0006], [0007] * * paragraphs [0013] - [0039] * | 1-15 | INV. G01S5/20 G01S5/22 G01S5/28 |
| X | US 2010/246328 A1 (GUDGEL JUDSON MANNON [US] ET AL) 30 September 2010 (2010-09-30) * figures 1-4 * * paragraphs [0007] - [0010] * * paragraphs [0018] - [0052] * | 1-15 | ADD. G01S5/00 G01S3/808 |
| X | US 2008/221793 A1 (FISHER KEN S [US] ET AL) 11 September 2008 (2008-09-11) * claims 1, 7; figures 1, 2, 5 * * paragraphs [0025] - [0037] * | 1-15 | |
| X | US 2017/328983 A1 (VOLGYESI PETER [US] ET AL) 16 November 2017 (2017-11-16) * figures 1-5, 7-9B * * paragraphs [0008] - [0023] * * paragraphs [0034] - [0075] * * paragraphs [0147], [0148] * | 1-15 | TECHNICAL FIELDS SEARCHED (IPC) G01S |
| X | US 2022/322001 A1 (RAFT CASPER SILBO [DK] ET AL) 6 October 2022 (2022-10-06) * figures 1-4 * * paragraphs [0005] - [0012] * * paragraphs [0019] - [0120] * | 1-15 | |
| A | US 2022/321992 A1 (RAFT CASPER SILBO [DK] ET AL) 6 October 2022 (2022-10-06) * figure 1 * * paragraphs [0019] - [0021], [0089] * | 1-3 | |

The present search report has been drawn up for all claims

| Place of search | Date of completion of the search | Examiner |
|---|---|---|
| Munich | 29 April 2024 | Krummenacker, Benoît |

EPO FORM 1503 03.82 (P04C01)

## ANNEX TO THE EUROPEAN SEARCH REPORT
## ON EUROPEAN PATENT APPLICATION NO.

EP 23 20 8376

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2024

| Patent document cited in search report | | Publication date | Patent family member(s) | | Publication date |
|---|---|---|---|---|---|
| US 2012063270 | A1 | 15-03-2012 | NONE | | |
| US 2010246328 | A1 | 30-09-2010 | CA | 2688533 A1 | 27-11-2008 |
| | | | EP | 2150832 A1 | 10-02-2010 |
| | | | KR | 20100025530 A | 09-03-2010 |
| | | | US | 2010246328 A1 | 30-09-2010 |
| | | | WO | 2008144739 A1 | 27-11-2008 |
| US 2008221793 | A1 | 11-09-2008 | US | 2008165047 A1 | 10-07-2008 |
| | | | US | 2008221793 A1 | 11-09-2008 |
| US 2017328983 | A1 | 16-11-2017 | NONE | | |
| US 2022322001 | A1 | 06-10-2022 | AU | 2020409714 A1 | 28-07-2022 |
| | | | CN | 115136615 A | 30-09-2022 |
| | | | EP | 3840396 A1 | 23-06-2021 |
| | | | EP | 4078988 A1 | 26-10-2022 |
| | | | JP | 2023507612 A | 24-02-2023 |
| | | | KR | 20220117304 A | 23-08-2022 |
| | | | US | 2022322001 A1 | 06-10-2022 |
| | | | WO | 2021123241 A1 | 24-06-2021 |
| US 2022321992 | A1 | 06-10-2022 | AU | 2020406213 A1 | 18-08-2022 |
| | | | CN | 115136614 A | 30-09-2022 |
| | | | EP | 3840397 A1 | 23-06-2021 |
| | | | EP | 4078989 A1 | 26-10-2022 |
| | | | JP | 2023509376 A | 08-03-2023 |
| | | | KR | 20220117270 A | 23-08-2022 |
| | | | US | 2022321992 A1 | 06-10-2022 |
| | | | WO | 2021123246 A1 | 24-06-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008084788 A

**Non-patent literature cited in the description**

- **MESAROS, ANNAMARIA et al.** Sound event detection: A tutorial.. *IEEE Signal Processing Magazine*, 2021, vol. 38 (5), 67-83